# FASCICULE DE BREVET EUROPEEN

(11) **EP 0 868 338 B1**
(45) Date de publication et mention de la délivrance du brevet: **16.06.1999**
(21) Numéro de dépôt: 96940977.0
(22) Date de dépôt: 18.12.1996
(51) Int. Cl.: B62D 21/04, B62D 21/16, B62D 21/17

(54) **VEHICULE AUTOMOBILE**
MOTORFAHRZEUG
MOTOR VEHICLE

(30) Priorité: 18.12.1995 FR 9515798
(43) Date de publication de la demande: 07.10.1998
(73) Titulaire: Sbarro, Francesco, 1422 Les Tuileries-de-Grandson Kanton Waadt (CH)
(72) Inventeur: Sbarro, Francesco, 1422 Les Tuileries-de-Grandson Kanton Waadt (CH)
(74) Mandataire: Nithardt, Roland
(86) Numéro de dépôt international: CH9600445
(87) Numéro de publication internationale: WO9722509

(56) Documents cités:
- DE-A- 4 032 433
- DE-A- 4 243 455
- DE-A- 4 322 717
- DE-C- 737 775
- DE-C- 739 937
- GB-A- 813 442
- US-A- 1 343 682
- PATENT ABSTRACTS OF JAPAN vol. 010, no. 216 (M-502), 29 Juillet 1986 & JP 61 054325 A (SUZUKI MOTOR CO LTD), 18 Mars 1986,

## Description

La présente invention concerne un véhicule automobile comportant un châssis poutre constitué d'un profilé extrudé en alliage léger qui présente un ensemble d'alvéoles allongées dont au moins une partie contient des fluides nécessaires au fonctionnement du véhicule, un bloc de suspension avant couplé audit châssis poutre, un bloc de suspension arrière également coupé audit châssis et un bloc moteur

On connaît déjà des véhicules de ce type, mais dont la conception est classique, c'est-à-dire où le châssis poutre n'a qu'une fonction de support des organes vitaux du véhicule. Dans certains cas, les cavités intérieures sont utilisées pour loger des accessoires ou des composants périphériques du moteur tels que le réservoir ou le faisceau de câbles et de gaines ou conduits, par exemple les conduits hydrauliques pour actionner les freins ou similaires.

La demande de brevet allemand DE 43 22 717 A1 décrit un véhicule ayant un châssis poutre où les différents composants sont directement montés sur les parois de ce châssis. Toutefois, ce montage est classique et le châssis n'a qu'une fonction de support.

La présente invention se propose de mieux exploiter le châssis poutre en lui attribuant des fonctions supplémentaires à celle de support des organes vitaux du véhicule.

Ce but est atteint par le véhicule selon l'invention, caractérisé en ce que ledit bloc moteur est directement monté à une des extrémités du châssis poutre et est connecté aux alvéoles allongées, des joints d'étanchéité appropriés étant interposés entre le bloc moteur et le front des parois délimitant ces alvéoles à une extrémité dudit profilé extrudé, en ce que l'un des blocs de suspension est monté sur le bloc moteur ou sur le châssis poutre et l'autre bloc de suspension est coupé au châssis poutre à son autre extrémité de manière à fermer lesdites alvéoles de façon étanche.

Selon une forme de réalisation préférée, l'une au moins des alvéoles constitue un réservoir de carburant qui est de préférence à double paroi. Une autre au moins de ces alvéoles constitue un radiateur pour un liquide de refroidissement du moteur, qui est en communication avec un circuit de refroidissement du moteur. Une autre au moins de ces alvéoles constitue un réservoir d'huile en communication avec un circuit d'huile du moteur.

Pour coupler les alvéoles ainsi réalisées au moteur et/ou aux autres organes vitaux du véhicule, le bloc moteur frontal est de préférence monté à l'avant du châssis poutre et équipé desdits joints d'étanchéité pour assurer un couplage étanche avec lesdites alvéoles et contient tous les organes de communication entre les alvéoles et les moyens de commande de ces organes.

Les organes de communication comprennent de préférence des vannes commandées, et les moyens de commande de ces organes comportent notamment des thermostats, des actionneurs électriques, hydrauliques ou pneumatiques desdites vannes commandées.

Dans la forme de réalisation préférée, le châssis poutre a une section transversale sensiblement triangulaire et la disposition des alvéoles longitudinales dans le profilé formant le châssis poutre est symétrique.

Dans cette forme de réalisation, la base triangulaire du châssis poutre comporte au moins un groupe d'alvéoles parallèles pourvues d'ailettes conductrices de la chaleur, ces alvéoles étant couplées entre elles pour constituer au moins un radiateur.

De préférence, le châssis poutre comporte au moins un premier groupe d'alvéoles constituant un radiateur à eau et au moins un deuxième groupe d'alvéoles constituant un radiateur à huile.

La présente invention sera mieux comprise en référence à la description d'un mode de réalisation préféré donné à titre d'exemple non limitatif et aux dessins annexés dans lesquels :
- la figure 1 est une vue en perspective du véhicule selon l'invention, la carrosserie étant représentée schématiquement,
- la figure 2 est une vue de dessus du châssis poutre, du moteur et des blocs de suspensions avant et arrière du véhicule selon l'invention,
- la figure 3 représente une vue de détail du profilé constituant le châssis poutre, et
- la figure 4 représente une autre forme de réalisation du châssis poutre.

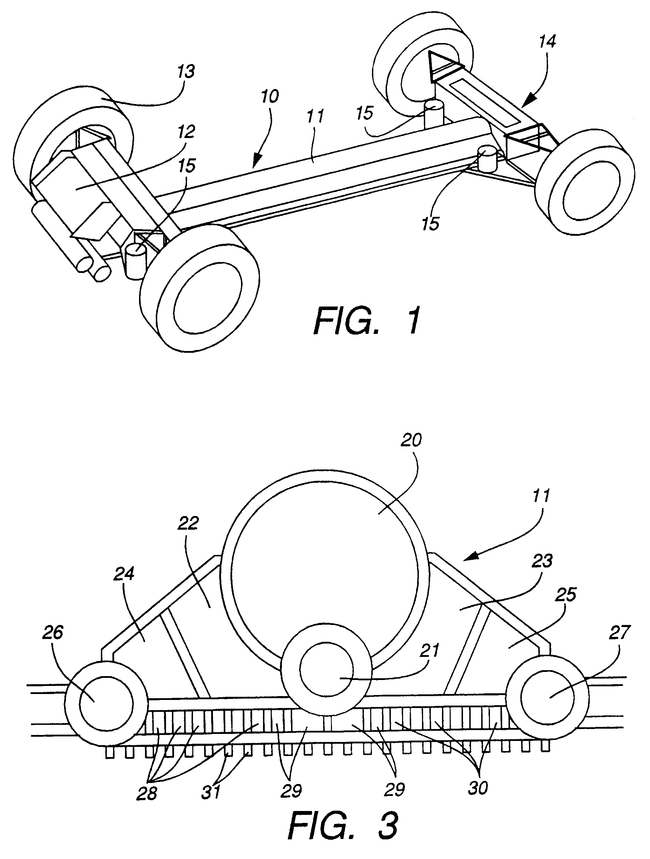

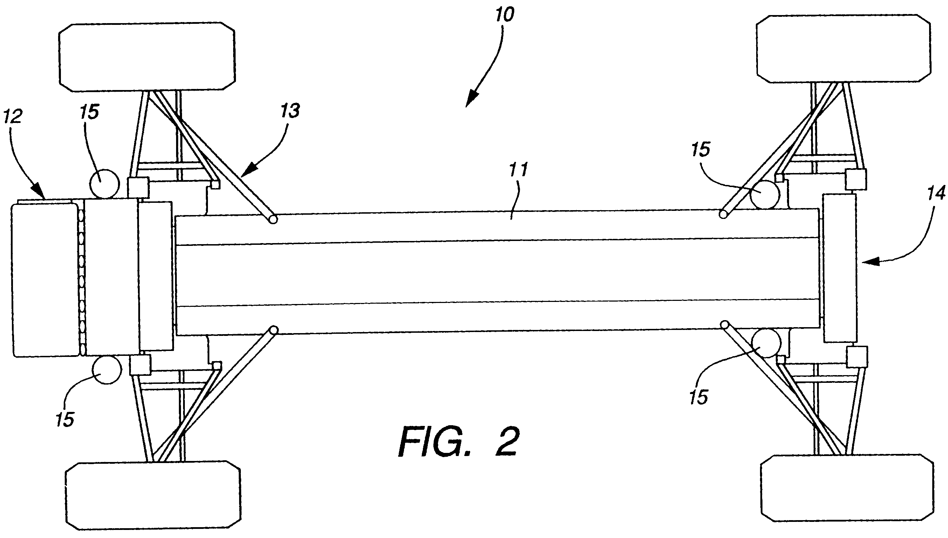

En référence aux figures et notamment aux figures 1 et 2, le véhicule 10 représenté comporte principalement un châssis poutre 11 dont l'extrémité avant est coupée à un bloc moteur frontal 12 qui porte un bloc de suspension avant 13 et dont l'extrémité arrière porte un bloc de suspension arrière 14. La carrosserie (non représentée) est montée sur le châssis par des moyens de liaison localisés en quatre points 15 définis par des supports solidaires du châssis poutre ou respectivement des blocs de suspensions avant et arrière montés aux extrémités de ce châssis poutre

Les quatre points 15 portent par exemple des vérins sur lesquels est fixée une carrosserie monocoque.

Le châssis poutre 11 est constitué d'un tronçon rectiligne de profilé en alliage léger ou, le cas échéant, de deux tronçons rectilignes de profilés disposés symétriquement. Les extrémités de ces tronçons sont obturées de façon étanche par les blocs de suspension et/ou, pour l'une d'entre elles, par le bloc moteur. Des joints d'étanchéité sont interposés entre le bloc moteur et le front des parois définissant l'extrémité avant du châssis poutre. Le moteur fait ainsi office de flasque de fermeture des alvéoles longitudinales ménagées à l'intérieur du profilé. Dans la construction représentée, c'est le bloc de suspension arrière qui fait office de flasque de fermeture étanche de l'autre extrémité du profilé en alliage léger.

Dans la réalisation schématiquement représentée, le bloc moteur frontal 12 se compose d'une part du moteur proprement dit et d'autre part de tous les composants mécaniques, électriques, hydrauliques, etc. qui constituent les organes périphériques habituels du moteur. Ce bloc moteur comporte une face de liaison avec l'extrémité du châssis poutre, cette face de liaison ou flasque de fermeture étant pourvue de joints d'étanchéité qui assurent une communication étanche entre l'intérieur du bloc moteur et l'intérieur du châssis poutre composé des alvéoles longitudinales intérieures au profilé extrudé, qui sera décrit plus en détail ci-dessous.

Le bloc de suspension avant 13 et le bloc de suspension arrière 14 sont structurés sous forme de modules autonomes rendus solidaires du châssis par des éléments de fixation classiques. Dans la réalisation selon la figure 1, le bloc de suspension arrière ferme de façon étanche le profilé extrudé.

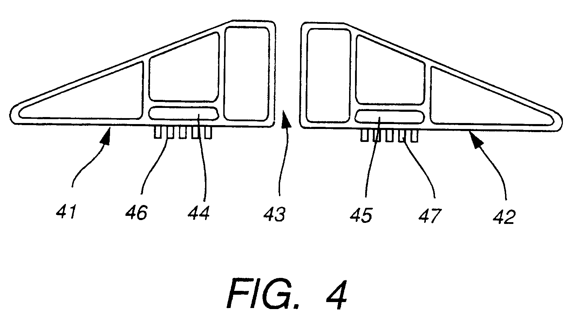

La figure 3 est une vue en coupe transversale du châssis poutre 11. Ce châssis est constitué par un profilé en alliage léger, par exemple en alliage d'aluminium ou de magnésium ou similaire, cloisonné de manière à comporter une série d'alvéoles longitudinales séparées les unes des autres. Outre la fonction de support de la carrosserie et des autres composants du véhicule, le châssis poutre assume d'autres fonctions grâce à une utilisation rationnelle des alvéoles longitudinales. C'est ainsi que l'alvéole centrale supérieure 20 de section circulaire pourrait par exemple être un réservoir de gaz, pour un véhicule dont le moteur utilise ce carburant. La paroi de l'alvéole 20 peut être renforcée ou même doublée, ce qui ne pose aucun problème de fabrication industrielle du profilé. L'alvéole centrale inférieure 21, de section circulaire, peut avantageusement abriter la transmission, a savoir l'arbre de transmission de la force motrice générée par le moteur aux roues arrières, aux roues avants ou à la fois aux quatre roues dans le cas d'un véhicule à quatre roues motrices.

Les deux alvéoles latérales 22 et 23 peuvent par exemple être des réservoirs de carburant. Pour des raisons de sécurité, leur paroi peut être renforcée ou doublée.

Deux autres alvéoles latérales 24 et 25 peuvent par exemple constituer respectivement un réservoir de liquide de refroidissement et un réservoir d'huile de lubrification du moteur.

Une alvéole latérale 26 ménagée à l'une des extrémités latérales du profilé peut servir de gaine technique dans laquelle sont déposés tous les câbles de transmission de l'énergie et/ou des signaux de commande.

Une autre alvéole latérale 27 ménagée à l'autre extrémité latérale du profilé peut servir de conduit des gaz d'échappement.

Dans la réalisation représentée, par exemple trois groupes d'alvéoles 28, 29 et 30 sont disposés dans la partie inférieure du profilé formant le châssis poutre 12. Ces alvéoles sont conçues pour former des radiateurs et comportent à cet effet une série d'ailettes 31 conductrices de la chaleur qui favorisent l'échange thermique.

Le premier groupe 28 d'alvéoles est par exemple un radiateur à eau. Il communique avec le réservoir de liquide de refroidissement 24 contenant un mélange d'eau et d'antigel, par l'intermédiaire d'une vanne thermostatique qui est montée dans le bloc moteur. Les alvéoles du groupe 28 sont reliées entre elles de telle manière que le liquide de refroidissement circule successivement à travers tous les alvéoles ou au moins une partie de ces alvéoles selon le degré de refroidissement souhaité.

Le deuxième groupe 29 d'alvéoles est par exemple un radiateur d'huile. Comme le radiateur de liquide de refroidissement décrit ci-dessus, il communique avec le réservoir correspondant, à savoir le réservoir d'huile 25 au moyen de vannes du type thermostatiques, montées dans le bloc moteur.

Le troisième groupe 30 d'alvéoles peut être affecté aux fluides hydrauliques du circuit de freinage, de direction assistée etc..

Selon le concept développé ci-dessus, on étend considérablement le rôle du châssis qui, de passif qu'il était dans les véhicules connus, devient actif en participant au fonctionnement du véhicule en mouvement. En outre, la disposition inclinée du bloc moteur augmente la sécurité passive du véhicule en générant une composante de soulèvement de l'avant du véhicule en cas de choc frontal. La rigidité du châssis poutre associée à la présence d'un bloc moteur frontal et à l'absence de radiateurs à l'avant constituent des éléments en faveur de la sécurité en cas d'accident, en formant un bouclier amortisseur.

En référence à la figure 4, le châssis poutre peut être composé de deux profilés extrudés identiques 41 et 42 qui sont disposés parallèlement de façon symétrique. L'écart 43 entre les deux profilés peut être mis à profit pour monter les supports des sièges du véhicule. Les alvéoles 44 et 45 pourvus d'ailettes 46 et 47 peuvent servir de radiateurs.

La présente invention n'est pas limitée à ces formes de réalisation, mais peut subir différentes modifications évidentes pour un homme du métier. Le nombre d'alvéoles longitudinales peut être étendu si nécessaire et l'affectation de ces alvéoles peut être différente de celle décrite. La fermeture des extrémités du châssis poutre peut se faire par soudure des blocs de suspension et/ou du bloc moteur ou par tout autre moyen adéquat, par exemple par boulonnage.

## Revendications

1. Véhicule automobile comportant un châssis poutre constitué d'au moins un profilé extrudé en alliage léger qui présente un ensemble d'alvéoles allongées dont au moins une partie contient des fluides nécessaires au fonctionnement du véhicule, un bloc de suspension avant couplé audit châssis poutre, un bloc de suspension arrière également couplé audit châssis et un bloc moteur, caractérisé en ce que ledit bloc moteur (12) est directement monté à une des extrémités du châssis poutre (11) et est connecté aux alvéoles allongées des joints d'étanchéité appropriés étant interposés entre le bloc moteur et le front des parois délimitant ces alvéoles à une extrémité dudit profilé extrudé, en ce que l'un des blocs de suspension (15) est monté sur le bloc moteur ou sur le châssis poutre et l'autre bloc de suspension (15) est couplé au châssis poutre à son autre extrémité de manière à fermer lesdites alvéoles de façon étanche.

2. Véhicule selon la revendication 1, caractérisé en ce que l'une au moins des alvéoles (22, 23) constitue un réservoir de carburant.

3. Véhicule selon la revendication 2, caractérisé en ce que ledit réservoir de carburant est à double paroi.

4. Véhicule selon la revendication 1, caractérisé en ce que l'une au moins (24) des alvéoles constitue un radiateur pour un liquide de refroidissement du moteur, en communication avec un circuit de refroidissement du moteur.

5. Véhicule selon la revendication 1, caractérisé en ce que l'une au moins (25) des alvéoles constitue un réservoir à huile en communication avec un circuit d'huile du moteur.

6. Véhicule selon la revendication 1, caractérisé en ce que le bloc moteur frontal (12) est monté à l'avant du châssis poutre (11), et en ce qu'il est équipé desdits joints d'étanchéité pour assurer un couplage étanche avec lesdites alvéoles et contient tous les organes de communication avec les alvéoles et les moyens de commande de ces organes de communication.

7. Véhicule selon la revendication 6, caractérisé en ce que les organes de communication comportent des vannes commandées, et en ce que les moyens de commande de ces organes comportent notamment des thermostats, des actionneurs électriques, hydrauliques ou pneumatiques desdites vannes commandées.

8. Véhicule selon la revendication 1, caractérisé en ce que le châssis poutre (11) a une section transversale sensiblement triangulaire.

9. Véhicule selon la revendication 8, caractérisé en ce que la disposition des alvéoles longitudinales dans le profilé formant le châssis poutre est symétrique.

10. Véhicule selon la revendication 8, caractérisé en ce que la base triangulaire du châssis poutre comporte au moins un groupe d'alvéoles parallèles pourvues d'ailettes (31) conductrices de la chaleur, ces alvéoles étant coupées entre elles pour constituer au moins un radiateur.

11. Véhicule selon la revendication 10, caractérisé en ce que le châssis poutre comporte au moins un premier groupe (28) d'alvéoles constituant un radiateur à eau.

12. Véhicule selon la revendication 10, caractérisé en ce que le châssis poutre comporte au moins un deuxième groupe (29) d'alvéoles constituant un radiateur à huile.

13. Véhicule selon la revendication 1, caractérisé en ce que le châssis poutre (11) comporte deux profilés extrudés (41, 42) identiques, disposés symétriquement à distance l'un de l'autre.

## Claims

1. A motor vehicle comprising a tubular chassis consisting of at least one extruded profile section made of a light alloy defining a set of elongated cells, at least some of which contain the fluids required for vehicle operation, a front suspension block coupled with said tubular chassis, a rear suspension block also coupled with said tubular chassis, and an engine block, characterized in that said engine block (12) is directly attached to one extremity of the tubular chassis (11) and connected to the elongated cells, with suitable gaskets interposed between the engine block and the front of the walls defining said cells at one extremity of said extruded profile element, and in that one of said suspension blocks (15) is mounted on the engine block or on the tubular chassis and the other suspension block (15) is coupled with the tubular chassis at its other extremity so as to tightly seal said cells.

2. A vehicle according to claim 1, characterized in that at least one of the cells (22, 23) constitutes a fuel tank.

3. A vehicle according to claim 2, characterized in that said fuel tank has double walls.

4. A vehicle according to claim 1, characterized in that at least one (24) of the cells constitutes a radiator for liquid engine cooling, communicating with the engine cooling circuit.

5. A vehicle according to claim 1, characterized in that at least one (25) of the cells constitutes an oil reservoir communicating with the engine oil circuit.

6. A vehicle according to claim 1, characterized in that the front engine block (12) is mounted at the front of the tubular chassis (11), and in that it is equipped with said gaskets to seal it tightly against said cells, and contains all the elements for communicating with the cells and the means for controlling said communication elements.

7. A vehicle according to claim 6, characterized in that the communication elements comprise control valves, and in that the means for controlling these elements consists primarily of thermostats and electrical, hydraulic or pneumatic control valve actuators.

8. A vehicle according to claim 1, characterized in that the tubular chassis (11) is generally triangular in shape.

9. A vehicle according to claim 8, characterized in that the longitudinal cells forming the tubular chassis are arranged symmetrically.

10. A vehicle according to claim 8, characterized in that the triangular base of the tubular chassis comprises at least one group of parallel cells with heat-conductive projections (31), said cells being coupled with each other to form at least one radiator.

11. A vehicle according to claim 10, characterized in that said tubular chassis comprises at least one first group (28) of cells forming a water-cooling radiator.

12. A vehicle according to claim 10, characterized in that said tubular chassis comprises at least one second group (29) of cells forming an oil radiator.

13. A vehicle according to claim 1, characterized in that the tubular chassis (11) comprises two identical extruded profile elements (41, 42), symmetrically arranged and separated from each other.

## Patentansprüche

1. Motorfahrzeug, bestehend aus einem Trägerrahmen, der von mindestens einem extrudierten Profil aus Leichtmetall-Legierung gebildet wird und folgendes umfaßt: eine Einheit von längsförmigen Zellen, von denen mindestens ein Teil Fluide enthält, die für den Betrieb des Fahrzeugs erforderlich sind, einen vorderen Aufhängungsblock, der mit dem Trägerrahmen gekoppelt ist, einen hinteren Aufhängungsblock, der auch mit dem Rahmen gekoppelt ist, und einen Motorblock, dadurch gekennzeichnet, daß der Motorblock (12) direkt an einem der Enden des Trägerrahmens (11) montiert und mit den längsförmigen Zellen verbunden ist, wobei entsprechende Dichtungen zwischen dem Motorblock und der Vorderseite der Wandungen angeordnet sind, die diese Zellen an einem Ende des extrudierten Profils begrenzen, daß einer der Aufhängungsblocks (15) auf dem Motorblock oder auf dem Trägerrahmen montiert ist und der andere Aufhängungsblock (15) mit dem Trägerrahmen an seinem anderen Ende gekoppelt ist, um die Zellen dicht zu verschließen.

2. Fahrzeug nach Anspruch 1, dadurch gekennzeichnet, daß mindestens eine der Zellen (22, 23) einen Treibstoffbehälter bildet.

3. Fahrzeug nach Anspruch 2, dadurch gekennzeichnet, daß der Treibstoffbehälter doppelwandig ist.

4. Fahrzeug nach Anspruch 1, dadurch gekennzeichnet, daß mindestens eine (24) der Zellen einen Radiator für eine Kühlflüssigkeit des Motors in Verbindung mit einem Kühlkreis des Motors darstellt.

5. Fahrzeug nach Anspruch 1, dadurch gekennzeichnet, daß mindestens eine (25) der Zellen einen Ölbehälter in Verbindung mit einem Ölkreis des Motors darstellt.

6. Fahrzeug nach Anspruch 1, dadurch gekennzeichnet, daß der vordere Motorblock (12) im vorderen Bereich des Trägerrahmens (11) montiert ist und daß er mit den Dichtungen versehen ist, um eine dichte Kopplung mit den Zellen zu gewährleisten, und daß er alle Verbindungselemente mit den Zellen und die Mittel zur Steuerung dieser Verbindungselemente umfaßt.

7. Fahrzeug nach Anspruch 6, dadurch gekennzeichnet, daß die Verbindungselemente gesteuerte Ventile umfassen, und daß die Steuermittel für diese Elemente insbesondere Thermostate, elektrische, hydraulische oder pneumatische Betätigungselemente für diese gesteuerten Ventile umfassen.

8. Fahrzeug nach Anspruch 1, dadurch gekennzeichnet, daß der Trägerrahmen (11) einen im wesentlichen dreieckigen Querschnitt aufweist.

9. Fahrzeug nach Anspruch 8, dadurch gekennzeichnet, daß die Anordnung der Längszellen in dem Profil, das den Trägerrahmen bildet, symmetrisch ist.

10. Fahrzeug nach Anspruch 8, dadurch gekennzeichnet, daß die dreieckige Basis des Trägerrahmens mindestens eine Gruppe von parallelen Zellen umfaßt, die mit wärmeleitenden Flügeln (31) versehen sind, wobei diese Zellen miteinander gekoppelt sind, um mindestens einen Radiator zu bilden.

11. Fahrzeug nach Anspruch 10, dadurch gekennzeichnet, daß der Trägerrahmen mindestens eine erste Gruppe (28) von Zellen umfaßt, die einen Wasserradiator bilden.

12. Fahrzeug nach Anspruch 10, dadurch gekennzeichnet, daß der Trägerrahmen mindestens eine zweite Gruppe (29) von Zellen umfaßt, die einen Ölradiator bilden.

13. Fahrzeug nach Anspruch 1, dadurch gekennzeichnet, daß der Trägerrahmen (11) zwei identische extrudierte Profile (41, 42) umfaßt, die symmetrisch in einem Abstand zueinander angeordnet sind.
